# EUROPÄISCHE PATENTANMELDUNG

(11) **EP 4 070 998 A1**
(43) Veröffentlichungstag der Anmeldung: **12.10.2022**
(21) Anmeldenummer: 22164717.5
(22) Anmeldetag: 28.03.2022
(51) Int. Cl.: B60R 3/02, B61D 23/02

(54) **ZUSTIEGSYSTEM FÜR EIN FAHRZEUG MIT EINER MODULAR AUSGEBILDETEN TRITTKASSETTE, SOWIE FAHRZEUG**

(30) Priorität: 01.04.2021 DE 102021108468
(71) Anmelder: Bode - Die Tür GmbH, 34123 Kassel (DE)
(72) Erfinder: Cimmino, Marco, 37139 Adelebsen (DE)
(74) Vertreter: Patentanwälte Bauer Vorberg Kayser

(57) **Zusammenfassung**

Die Erfindung betrifft ein Zustiegsystem für ein Fahrzeug, insbesondere für ein Fahrzeug des öffentlichen Personenverkehrs, umfassend eine ein Kassettengehäuse (1) aufweisende modular ausgebildete Trittkassette (2), die in einer fahrzeugseitigen Kassettenaufnahme (3) anordenbar ist und Mittel zur lösbaren Verbindung mit einem fahrzeugseitigen Befestigungselement aufweist, wobei die Trittkassette (2) zudem ein Antriebsmodul (4), ein durch das Antriebsmodul (4) ein- und ausfahrbares Ausschubmodul (5) sowie ein mit dem Ausschubmodul (5) verbundenes Trittplattenmodul (6) aufweist.

Um bei einem solchen Zustiegsystem zu ermöglichen, dass dieses gezielt auf die baulichen Gegebenheiten des Fahrzeugs angepasst werden kann, in welchem das Zustiegsystem zum Einsatz kommen soll und ferner eine vereinfachte Montage des Zustiegsystems sowie eine flexible Anpassung des Zustiegsystems an Kundenwünsche zu ermöglichen, ist bei einem erfindungsgemäßen Zustiegsystem vorgesehen, dass das Antriebsmodul (4) innerhalb des Kassettengehäuses (1) positionsfest angeordnet ist und eine gleichbleibende Größe aufweist, und dass das Kassettengehäuse (1) und/oder die weiteren Module (5, 6) in Bezug auf ihre Größe anpassbar sind.

## Beschreibung

Die vorliegende Erfindung betrifft ein Zustiegsystem für ein Fahrzeug, insbesondere für ein Fahrzeug des öffentlichen Personenverkehrs, umfassend eine ein Kassettengehäuse aufweisende modular ausgebildete Trittkassette, die in einer fahrzeugseitigen Kassettenaufnahme anordenbar ist und Mittel zur lösbaren Verbindung mit einem fahrzeugseitigen Befestigungselement aufweist, wobei die Trittkassette zudem ein Antriebsmodul, ein durch das Antriebsmodul ein- und ausfahrbares Ausschubmodul sowie ein mit dem Ausschubmodul verbundenes Trittplattenmodul aufweist.

Zustiegsysteme werden verwendet, um Personen das Ein- und Aussteigen in ein Fahrzeug zu erleichtern. Unter einem "Zustieg" kann also sowohl das Ein- als auch Aussteigen in das Fahrzeug zu verstehen sein. Im Sinne der Erfindung kann ein Fahrzeug des öffentlichen Personenverkehrs beispielsweise ein Schienenfahrzeug wie ein Zug, eine Straßenbahn, eine Tram, eine U-Bahn etc. sein. Auch kann ein solches Fahrzeug ein radgebundenes Fahrzeug wie ein Bus sein. Zustiegsysteme erleichtern den Einstieg häufig dadurch, dass sie einen Spalt zwischen einem Haltesteig (Haltestelle) und dem Fahrzeug verkleinern und/oder einen Höhenunterschied zwischen Fahrzeug und Haltesteig ausgleichen. Zustiegsysteme können in beispielsweise in Form von Schiebetrittsystemen oder Klapptrittsystemen ausgebildet sein. Auch kombinierte Systeme sind bekannt. Vorliegend sei insbesondere auf Schiebetrittsysteme abgestellt.

Je nach Fahrzeugtyp, Fahrzeuggröße oder Kundenwunsch kann der für ein Zustiegsystem zur Verfügung stehende Bauraum variieren. Entsprechend besteht ein erhöhter Bedarf an einer einfachen und flexiblen Anpassung von Zustiegsystemen bzw. den zugehörigen Trittkassetten an den in einem Fahrzeug zur Verfügung stehenden Bauraum. Bisher war dazu in der Regel eine Neu- bzw. Umkonstruktion der Trittkassetten erforderlich, was mit einem erheblichen planerischen Aufwand verbunden ist.

Der vorliegenden Erfindung liegt daher die Aufgabe zugrunde ein Zustiegsystem bereitzustellen, welches gezielt auf die baulichen Gegebenheiten des Fahrzeugs anpassbar ist, in welchem das Zustiegsystem zum Einsatz kommen soll. Ferner soll die Montage des Zustiegsystems vereinfacht werden und das Zustiegsystem flexibel an Kundenwünsche anpassbar sein. Die gleiche Aufgabe liegt dem erfindungsgemäß vorgeschlagenen Fahrzeug zugrunde.

Die genannte Aufgabe wird mit einem Zustiegsystem gemäß dem Anspruch 1 sowie einem Fahrzeug gemäß dem Anspruch 10 gelöst.

Das erfindungsgemäße Zustiegsystem eignet sich zur Verwendung für ein Fahrzeug, insbesondere für ein Fahrzeug des öffentlichen Personenverkehrs. Das Zustiegsystem umfasst eine ein Kassettengehäuse aufweisende modular ausgebildete Trittkassette, die in einer fahrzeugseitigen Kassettenaufnahme anordenbar ist und Mittel zur lösbaren Verbindung mit einem fahrzeugseitigen Befestigungselement aufweist, wobei die Trittkassette zudem ein Antriebsmodul, ein durch das Antriebsmodul ein- und ausfahrbares Ausschubmodul sowie ein mit dem Ausschubmodul verbundenes Trittplattenmodul aufweist. Erfindungsgemäß zeichnet sich das Zustiegsystem dadurch aus, dass das Antriebsmodul innerhalb des Kassettengehäuses positionsfest angeordnet ist und eine gleichbleibende Größe aufweist, und dass das Kassettengehäuse und/oder die weiteren Module in Bezug auf ihre Größe anpassbar sind.

Das Kassettengehäuse kann in Form eines Kassettenrahmens ausgebildet sein, muss also nicht vollständig geschlossen sein. Das Gehäuse kann aus Metall, Kunststoff, Verbundmaterialien oder anderen geeigneten Materialien gefertigt sein. Der Kassettenrahmen kann beispielsweise eine U-Form oder C-Form aufweisen. Die Form des Kassettengehäuses oder Kassettenrahmens ist an die Form der Kassettenaufnahme angepasst. Bei der Kassettenaufnahme kann es sich um eine fahrzeugseitige Aussparung handeln, in welcher die Kassette vollständig aufnehmbar ist. Beispielsweise kann die Kassettenaufnahme unterhalb des Fahrzeugbodens (hiermit ist der durch die im Fahrzeug befindlichen Personen betretene Fußboden im Fahrzeuginneren gemeint) angeordnet sein. In der Kassettenaufnahme ist ein fahrzeugseitiges Befestigungselement, beispielsweise ein Rahmenelement, angeordnet, an welchem die Kassette befestigbar ist. Das Rahmenelement kann in seiner Form und Größe an das Kassettengehäuse (Kassettenrahmen) angepasst sein.

Bei dem Antriebsmodul kann es sich beispielsweise um eine elektrische Antriebseinheit, wie einen Elektromotor, handeln. Bei dem Ausschubmodul kann es sich beispielsweise um einen Ausschubrahmen oder Ausschubschienen handeln, die einerseits mit dem Antriebsmodul und andererseits mit dem Trittplattenmodul verbunden sind. Das Trittplattenmodul kann ein- oder mehrteilig ausgebildet sein. Ferner ist das Trittplattenmodul dahingehend ausgebildet, dass es das Gewicht, von zusteigenden Personen aufnehmen kann. Über das Antriebsmodul ist das Trittplattenmodul, z.B. eine Trittplatte, von einer eingefahrenen Stellung in Richtung einer ausgefahrenen Stellung ausfahrbar und umgekehrt.

Wie erwähnt, zeichnet sich das Zustiegsystem dadurch aus, dass das Antriebsmodul innerhalb des Kassettengehäuses positionsfest angeordnet ist und eine gleichbleibende (d.h. fixe) Größe aufweist. Dadurch kann das Antriebsmodul in Trittkassetten unterschiedlicher Größe (Länge, Breite, Höhe) eingesetzt und verbaut werden. Somit wird eine aufwendige und kostenintensive Größenanpassung der Antriebseinheit vermieden. Das Kassettengehäuse und/oder die weiteren Module hingegen können in Bezug auf ihre Größe angepasst werden, je nach vorliegendem Bauraum (Größe der Kassettenaufnahme) im Fahrzeug bzw. je nach Kundenwunsch. Dadurch wird eine modulare Größenanpassbarkeit für Trittkassetten ermöglicht. Eine derart ausgebildete Trittkassette bzw. ein solches Zustiegsystem ermöglicht eine deutlich vereinfachte Montage (frontales Einschieben der Trittkassette in eine fahrzeugseitige Trittkassettenaufnahme, elektrische Kontaktierung des Antriebsmoduls über standardisierte Steckerelemente und Befestigen der Trittkassette an einem fahrzeugseitigen Befestigungselement). Gleiches gilt für die Wartung der Trittkassette, die aufgrund des einfachen Montierens/Demontierens ebenfalls deutlich vereinfacht wird.

Weitere vorteilhafte Ausgestaltungen der Erfindung sind in den Unteransprüchen und in der nachfolgenden Beschreibung der in den Unteransprüchen angegebenen Merkmale wiedergegeben.

Nach einer ersten Ausgestaltung der Erfindung kann ein an der Trittkassette angeordnetes Steckelement vorgesehen sein, welches dazu eingerichtet ist, mit einem dazu korrespondierenden fahrzeugseitigen Steckelement zusammenzuwirken und das Antriebsmodul mit elektrischer Energie zu versorgen und/oder einen Datenaustausch zu gewährleisten. Unter zueinander korrespondierenden "Steckelementen" ist an dieser Stelle die Bereitstellung einer Steckverbindung im Sinne eines Stecker-Buchse oder Schlüssel-Schloss Prinzips zu verstehen. Das fahrzeugseitige Steckelement ist mit einer fahrzeugseitigen elektrischen Energiequelle und/oder mit einer Datenverarbeitungseinheit verbunden. Das kassettenseitige Steckelement ist mit dem Antriebsmodul elektrisch und/oder signaltechnisch verbunden. Das kassettenseitige Steckelement ist vorzugsweise positionsfest angeordnet, sodass sich eine diesbezügliche Positionsanpassung bei Veränderung der Größe bestimmter Module entbehrt. Die Verbindung zwischen dem kassettenseitigen Steckelement und Antriebsmodul kann durch ein Kabel oder anderweitige elektrische- bzw. Signalverbindungsmittel gewährleistet sein.

Auch kann vorgesehen sein, dass das Antriebsmodul in seiner Größe variabel ist, jedoch in einem vorgegebenen Raumelement des Kassettengehäuses von gleichbleibender Größe angeordnet ist. In bestimmten Fällen kann es erforderlich sein die Größe des Antriebsmoduls (z.B. aufgrund von erforderlichen Leistungseigenschaften) anzupassen. Erfindungsgemäß kann vorgesehen sein, jenen Bauraum, in welchem das Antriebsmodul angeordnet ist, konstant zu halten. Somit wird ein gewisser Größenspielraum auch für das Antriebsmodul ermöglicht. Durch die gleichbleibende Größe des das Antriebsmodul aufnehmenden Bauraums innerhalb der Trittkassette bleibt die erfindungsgemäße flexible Größenanpassung des Kassettengehäuses und/oder der weiteren Module erhalten.

Nach einer weiteren Ausgestaltung der Erfindung kann vorgesehen sein, dass das Kassettengehäuse und/oder die weiteren Module in Bezug auf ihre Größe entlang oder quer, insbesondere in Horizontal- oder Vertikalrichtung des Fahrzeugs, zur Fahrzeuglängsrichtung anpassbar sind. Vereinfacht ausgedrückt kann das Kassettengehäuse und/oder die weiteren Module in ihrer Länge, Breite und Höhen, also in sämtlichen Raumrichtungen in ihrer Größe angepasst werden.

Nach einer weiteren Ausgestaltung der Erfindung kann vorgesehen sein, dass die Mittel zur lösbaren Verbindung Schraubverbindungen, insbesondere vier Schraubverbindungen, sind. Schraubverbindungen sind kostengünstig und ermöglichen eine einfache Montage/Demontage. Sowohl an der Trittkassette als auch fahrzeugseitig können Lochöffnungen ausgebildet sein, durch welche Schraubbolzen (in Verbindung mit geeigneten Schraubmuttern) eine Schraubverbindung bereitstellen können. Auch andere Befestigungsmittel sind denkbar, beispielsweise Nietverbindungen oder hochfeste Klebeverbindungen.

Nach einer weiteren Ausgestaltung der Erfindung kann vorgesehen sein, dass das fahrzeugseitige Befestigungselement ein Rahmenelement der fahrzeugseitigen Kassettenaufnahme ist. Unterhalb einer sich im Wesentlichen in Fahrzeuglängsrichtung erstreckenden Trittleiste können Anschraubbereiche vorgesehen/angeordnet sein, an denen die Trittkassette (bzw. das Trittkassettengehäuse) über Schrauben in Form von Schraubverbindungen befestigt werden kann. Die Anschraubbereiche können Teil des Rahmenelements sein oder an diesem angeordnet sein, welches die Trittkassettenaufnahme begrenzt oder umgibt (z. B. begrenzend nach fahrzeugunten, nach fahrzeuginnen, nach fahrzeugaußen und nach links und rechts bezogen auf die Fahrzeuglängsrichtung). Die genannten Anschraubbereiche können am linken und rechten Randbereich der Trittkassettenaufnahme angeordnet sein, nämlich unterhalb der Trittleiste. Auch unmittelbar an der Trittleiste können solche Anschraubbereiche vorgesehen sein. An zu den Anschraubbereichen korrespondierenden Stellen der Trittkassette (bzw. des Trittkassettengehäuses) können kassettenseitige Anschraubbereiche vorgesehen sein, die über Schraubmittel mit den Anschraubbereichen verbindbar sind. Schraubmittel können z. B. Schrauben (Gewindeschrauben), Muttern und Unterlegscheiben umfassen.

Nach einer weiteren Ausgestaltung der Erfindung kann vorgesehen sein, dass die Trittkassette von fahrzeugaußen frontal in die Kassettenaufnahme einschiebbar ist. Dadurch wird eine besonders einfache Montage ermöglicht. Nach dem Einschieben der Trittkassette in die Kassettenaufnahme kann die Trittkassette über die beschriebenen Mittel zur lösbaren Verbindung mit dem Fahrzeug verbunden werden.

Nach einer weiteren Ausgestaltung der Erfindung kann vorgesehen sein, dass an einem nach fahrzeuginnen weisenden Ende der Trittkassette (bzw. des Kassettengehäuses) Zentrierdorne angeordnet sind, die beim frontalen Einschieben der Trittkassette in die Kassettenaufnahme in dazu korrespondierenden Zentrierdornaufnahmen aufnehmbar sind. Die Zentrierdornaufnahmen sind dabei an einem hinteren Ende der Kassettenaufnahme angeordnet. Die Zentrierdorne dienen samt den Zentrierdornaufnahmen als Orientierungshilfe/Ausrichtungshilfe beim Einschieben der Trittkassette von fahrzeugaußen in die Kassettenaufnahme. Sobald die Zentrierdorne in den Zentrierdornaufnahmen (zumindest teilweise) aufgenommen sind, ist eine erleichterte finale Positionierung, Ausrichtung und Montage der Trittkassette in der Trittkassettenaufnahme ermöglicht. Die Zentrierdorne verleihen der Trittkassette bei zumindest teilweiser Aufnahme der Zentrierdorne in den zugehörigen Zentrierdornaufnahmen innerhalb der Trittkassettenaufnahme eine Grundstabilität. Nach finaler Montage der Trittkassette verbleiben die Zentrierdorne in den Zentrierdornaufnahmen, d.h. beim Ein- und Ausfahren des Ausschubmoduls werden die Zentrierdorne vorzugsweise nicht aus ihrer Stellung in den Zentrierdornaufnahmen bewegt. Denn dabei bewegt sich vorzugsweise das Ausschubmodul relativ zum positionsfest angeordneten Kassettengehäuse.

Nach einer weiteren Ausgestaltung der Erfindung kann vorgesehen sein, dass die Kassettenaufnahme eine oder mehrere Gleitaufnahme(n) aufweist, entlang welcher ein vereinfachtes Einschieben der Trittkassette ermöglicht ist. Die eine oder mehreren Gleitaufnahmen können sich quer zur Fahrzeuglängsrichtung (also in Fahrzeugquerrichtung) erstrecken, nämlich von fahrzeugaußen nach fahrzeuginnen. Entlang der Gleitaufnahme(n) können entsprechende Gleitmittel beim Einschieben oder Herausziehen der Trittkassette bzw. des Kassettengehäuses gleiten. Die Gleitmittel sind dazu an der Trittkassette bzw. dem Kassettengehäuse angeordnet. Gleitaufnahmen und Gleitmittel können geometrisch und/oder funktional zusammenwirken, um ein Gleiten der Gleitmittel entlang der Gleitaufnahmen zu ermöglichen. Die Gleitaufnahmen und Gleitmittel können beispielsweise gebildet sein durch zusammenwirkende Kombinationen wie Gleitstange /Gleitschlitten, Gleitkanal/Gleitschlitten, Gleitschiene/Gleitläufer etc. Gleitaufnahmen und Gleitmittel können die gleiche oder eine unterschiedliche Länge aufweisen. Durch den Einsatz von Gleitaufnahmen und Gleitmitteln kann die Trittkassette beim Einschieben in die Kassettenaufnahme geführt werden, was ein Verkanten oder ungenaues Positionieren der Trittkassette verhindert.

Es sei betont, dass die der Erfindung zugrunde liegende Aufgabe auch mit einem Fahrzeug, insbesondere ein Fahrzeug des öffentlichen Personenverkehrs gelöst wird, welches ein erfindungsgemäßes Zustiegsystem aufweist.

Nachfolgend sei die Erfindung anhand von Zeichnungen weiter erläutert. Dort zeigen:
- Fig. 1: in perspektivischer Ansicht ein Zustiegsystem für ein Fahrzeug,
- Fig. 2: in Aufsicht eine Trittkassette gemäß der Erfindung.

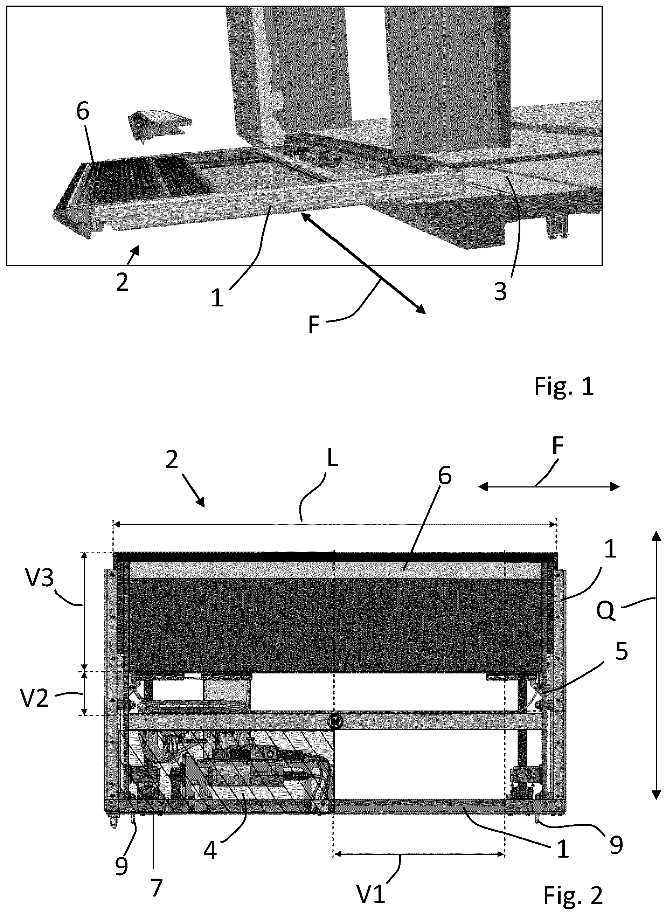

In der Figur 1 in einer perspektivischen Ansicht ein Zustiegsystem für ein Fahrzeug, beispielsweise ein Schienenfahrzeug dargestellt. Das Zustiegsystem umfasst eine ein Kassettengehäuse 1 aufweisende Trittkassette 2. Das Kassettengehäuse 1 kann in Form eines durchgängigen oder aus mehreren Segmenten ausgebildeten Rahmens bereitgestellt sein. Wie in der Aufsichtsdarstellung nach Fig. 2 gezeigt, kann das Kassettengehäuse 1 eine U-förmige Grundform aufweisen. Wie in Figur 1 gezeigt ist die Trittkassette 1 in einer fahrzeugseitigen Kassettenaufnahme 3 anordenbar. Dort kann die Trittkassette über geeignete Mittel lösbar mit einem fahrzeugseitigen Befestigungselement (z.B. einem Rahmen, nicht dargestellt) verbunden werden. Die lösbare Verbindung wird insbesondere über Schraubverbindungen bereitgestellt.

Wie in Fig. 2 dargestellt, weist die Trittkassette 2 ein Antriebsmodul 4 auf. Das Antriebsmodul 4 ermöglicht ein Aus- und Einfahren eines Ausschubmoduls 5. Das Ausschubmodul 5 ist vorliegend in Form von parallelen Schienen ausgebildet, die über ein Gestänge oder eine anderweitige Koppeleinrichtung mit dem Antriebsmodul 4 wirkverbunden sind. Das Ausschubmodul 5 wiederrum ist mit einem Trittplattenmodul 6, sprich einer Trittplatte, verbunden. Das Ausschubmodul 5 ist innerhalb der Trittkassette 2 linearbeweglich angeordnet und ermöglicht eine Linearverschiebung des Trittplattenmoduls 6 von einer eingefahrenen Stellung in Richtung einer ausgefahrenen Stellung und umgekehrt.

Das Antriebsmodul 4 ist innerhalb des Kassettengehäuses 1 positionsfest angeordnet ist und weist eine gleichbleibende Größe auf. Das Kassettengehäuse 1 und/oder die weiteren Module 5, 6 sind in Bezug auf ihre Größe anpassbar. Das Antriebsmodul 4 bildet somit eine standardisierte Baueinheit aus. Vorzugsweise ist an der Trittkassette 2 ein Steckelement 7 angeordnet, welches dazu eingerichtet ist, mit einem dazu korrespondierenden fahrzeugseitigen Steckelement (nicht dargestellt) zusammenzuwirken und das Antriebsmodul 4 mit elektrischer Energie zu versorgen und/oder einen Datenaustausch zu gewährleisten. Das Steckelement 7 bzw. dessen Position kann ebenfalls standardisiert sein.

Sowohl entlang der Fahrzeuglängsrichtung L als auch in Fahrzeugquerrichtung Q ist das Kassettengehäuse 1 sowie das Ausschubmodul 5 und das Trittplattenmodul 6 in ihrer Größe anpassbar. Dadurch können Größenvariablen V1 (entlang der Längsrichtung F) sowie V2, V3 (entlang der Querrichtung Q) bereitgestellt werden. Bei gleichbleibender Größe des Antriebsmoduls 4 bzw. eines das Antriebsmodul 4 aufnehmenden Bauraums der Trittkassette 2 entlang der Querrichtung Q und Längsrichtung F ist die Größe der Variablen V1, V2 und V3 variabel anpassbar. Beachtet sei, dass nebst dem Kassettengehäuse 1 und den Modulen 5, 6 noch weitere Komponenten der Trittkassette 2 in Bezug auf ihre Größe anpassbar ausgebildet sein können.

Beispielhaft seien an dieser Stelle Größenbereiche für die vorgenannten Variablen angegeben. Die Trittkassette 2 kann entlang der Fahrzeuglängsrichtung F beispielsweise eine Länge L von 800 mm (0,8 m) bis 1500 mm (1,5 m) aufweisen. Je nach Größe des Antriebsmoduls 4 in Fahrzeuglängsrichtung F, kann die Größe von V1 variiert werden, typischerweise können unterschiedliche Größen von V1 in 100 mm Schritten bereitgestellt werden. V3 kann eine Größe von 270 mm bis 540 mm aufweisen, wobei typischerweise innerhalb des genannten Größenbereichs von 270 mm bis 540 mm unterschiedliche Größen in 30 mm Schritten bereitgestellt werden. V2 kann eine Größe von mindestens > 75 mm aufweisen, ist jedoch stufenlos in der Größe anpassbar. Die Höhe der Trittkassette 2 ist ebenfalls je nach zur Verfügung stehendem Bauraum anpassbar, typische Höhen sind 61 mm, 68 mm oder 76 mm.

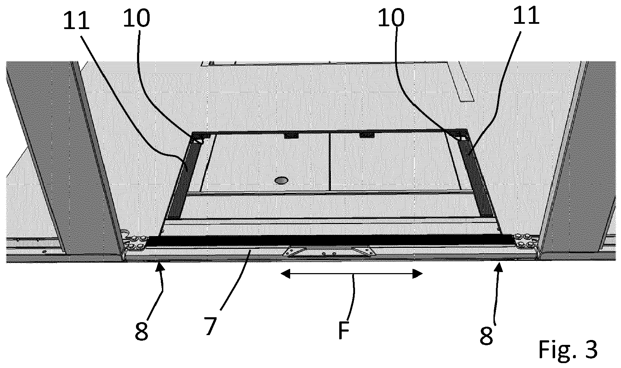

Wie erwähnt, wird die Trittkassette 2 über Mittel zur lösbaren Verbindung (Verbindungsmittel) mit einem fahrzeugseitigen Befestigungselement verbunden. Das fahrzeugseitige Befestigungselement ist vorzugsweise ein Rahmenelement (insbesondere der Trittkassettenaufnahme 3). Wie in Figur 3 gezeigt, sind unterhalb einer sich im Wesentlichen in Fahrzeuglängsrichtung F erstreckenden Trittleiste 7 Anschraubbereiche 8 vorgesehen, an denen die Trittkassette 2 über Schrauben in Form von Schraubverbindungen befestigbar ist. Die Anschraubbereiche 8 sind Teil des Rahmenelements, welches die Trittkassettenaufnahme 3 begrenzt oder umgibt (z. B. begrenzend nach fahrzeugunten, nach fahrzeuginnen, nach fahrzeugaußen und nach links und rechts bezogen auf die Fahrzeuglängsrichtung F). Die genannten Anschraubbereiche 8 sind am linken und rechten Randbereich der Trittkassettenaufnahme 3 angeordnet, nämlich unterhalb der Trittleiste 7. Auch unmittelbar an der Trittleiste 7 können solche Anschraubbereiche 8 vorgesehen sein. An zu den Anschraubbereichen 8 korrespondierenden Stellen der Trittkassette 2 sind kassettenseitige Anschraubbereiche (nicht dargestellt) vorgesehen, die über Schraubmittel mit den Anschraubbereichen 8 verbindbar sind. Schraubmittel können z. B. Schrauben (Gewindeschrauben), Muttern und Unterlegscheiben umfassen. An der Trittleiste 7 können bestimmte Funktionselemente angeordnet werden, beispielsweise eine Bürstenleiste zum Abkehren des Trittplattenmoduls 6 beim Ein- und Ausfahren.

Wie in der Figur 2 gezeigt, sind an einem nach fahrzeuginnen weisenden Ende der Trittkassette 2 Zentrierdorne 9 angeordnet, die beim frontalen Einschieben der Trittkassette 2 in die Kassettenaufnahme 3 in dazu korrespondierenden Zentrierdornaufnahmen 10 aufnehmbar sind. Derartige Zentrierdornaufnahmen 10 sind in der Figur 3 gezeigt. Die Zentrierdorne 9 sind an dem Trittkassettengehäuse 1 angeordnet. Figur 3 zeigt ferner, dass die Kassettenaufnahme zwei Gleitaufnahmen 11 aufweist, entlang welcher ein vereinfachtes Einschieben der Trittkassette 2 ermöglicht ist. Die Gleitaufnahmen 11 erstrecken sich quer zur Fahrzeuglängsrichtung L, nämlich von fahrzeugaußen nach fahrzeuginnen. Entlang der Gleitaufnahmen 11 können entsprechende Gleitmittel beim Einschieben oder Herausziehen der Trittkassette 2 bzw. des Kassettengehäuses 1 gleiten. Die Gleitmittel sind dazu an der Trittkassette 2 bzw. dem Kassettengehäuse 1 angeordnet. Die Gleitaufnahmen 11 und Gleitmittel können beispielsweise gebildet sein durch zusammenwirkende Kombinationen wie Gleitstange /Gleitschlitten, Gleitkanal/Gleitschlitten, Gleitschiene/Gleitläufer etc. Gleitaufnahmen 11 und Gleitmittel können die gleiche oder eine unterschiedliche Länge aufweisen.

## Patentansprüche

1. Zustiegsystem für ein Fahrzeug, insbesondere für ein Fahrzeug des öffentlichen Personenverkehrs, umfassend eine ein Kassettengehäuse (1) aufweisende modular ausgebildete Trittkassette (2), die in einer fahrzeugseitigen Kassettenaufnahme (3) anordenbar ist und Mittel zur lösbaren Verbindung mit einem fahrzeugseitigen Befestigungselement aufweist, wobei die Trittkassette (2) zudem ein Antriebsmodul (4), ein durch das Antriebsmodul (4) ein- und ausfahrbares Ausschubmodul (5) sowie ein mit dem Ausschubmodul (5) verbundenes Trittplattenmodul (6) aufweist, **dadurch gekennzeichnet, dass** das Antriebsmodul (4) innerhalb des Kassettengehäuses (1) positionsfest angeordnet ist und eine gleichbleibende Größe aufweist, und dass das Kassettengehäuse (1) und/oder die weiteren Module (5, 6) in Bezug auf ihre Größe anpassbar sind.

2. Zustiegsystem nach Anspruch 1, **gekennzeichnet durch** ein an der Trittkassette (2) angeordnetes Steckelement, welches dazu eingerichtet ist, mit einem dazu korrespondierenden fahrzeugseitigen Steckelement zusammenzuwirken und das Antriebsmodul (4) mit elektrischer Energie zu versorgen und/oder einen Datenaustausch zu gewährleisten.

3. Zustiegsystem nach Anspruch 1, **dadurch gekennzeichnet, dass** das Antriebsmodul (4) in seiner Größe variabel ist, jedoch in einem vorgegebenen Raumelement (V) des Kassettengehäuses (1) von gleichbleibender Größe angeordnet ist.

4. Zustiegsystem nach Anspruch 1, **dadurch gekennzeichnet, dass** das Kassettengehäuse (1) und/oder die weiteren Module (5, 6) in Bezug auf ihre Größe entlang oder quer zur Fahrzeuglängsrichtung (F) anpassbar sind.

5. Zustiegsystem nach Anspruch 1, **dadurch gekennzeichnet, dass** die Mittel zur lösbaren Verbindung Schraubverbindungen, insbesondere vier Schraubverbindungen, sind.

6. Zustiegsystem nach einem der vorangehenden Ansprüche, **dadurch gekennzeichnet, dass** das fahrzeugseitige Befestigungselement ein Rahmenelement der fahrzeugseitigen Kassettenaufnahme (3) ist.

7. Zustiegsystem nach einem der vorangehenden Ansprüche, **dadurch gekennzeichnet, dass** die Trittkassette (2) von fahrzeugaußen frontal in die Kassettenaufnahme (3) einschiebbar ist.

8. Zustiegsystem nach einem der vorangehenden Ansprüche, **dadurch gekennzeichnet, dass** an einem nach fahrzeuginnen weisenden Ende der Trittkassette (2) Zentrierdorne (9) angeordnet sind, die beim frontalen Einschieben der Trittkassette (2) in die Kassettenaufnahme (3) in dazu korrespondierenden Zentrierdornaufnahmen (10) aufnehmbar sind.

9. Zustiegsystem nach einem der vorangehenden Ansprüche, **dadurch gekennzeichnet, dass** die Kassettenaufnahme (3) eine oder mehrere Gleitaufnahme(n) (11) aufweist, entlang welcher ein vereinfachtes Einschieben der Trittkassette (2) ermöglicht ist.

10. Fahrzeug, insbesondere ein Fahrzeug des öffentlichen Personenverkehrs, mit einem Zustiegsystem nach einem der Ansprüche 1 bis 9.
